# EUROPEAN PATENT SPECIFICATION

(11) **EP 2 415 844 B1**
(45) Date of publication and mention of the grant of the patent: **12.09.2018**
(21) Application number: 10758789.1
(22) Date of filing: 31.03.2010
(51) Int. Cl.: C09D 183/02, C09D 127/12, C09D 133/14, C09D 167/00

(54) **ROOM TEMPERATURE-CURABLE RESIN COATING COMPOSITION**
BEI RAUMTEMPERATUR HÄRTBARE HARZBESCHICHTUNGSZUSAMMENSETZUNG
COMPOSITION DE REVÊTEMENT À BASE D'UNE RÉSINE DURCISSABLE À TEMPÉRATURE AMBIANTE

(30) Priority: 31.03.2009 JP 2009086609
(43) Date of publication of application: 08.02.2012
(73) Proprietor: Daikin Industries, Ltd., Osaka 530-8323 (JP)
(72) Inventor: MURAKAMI, Shinya, Settsu-shi Osaka 566-8585 (JP); FUKUHARA, Yoshinari, Settsu-shi Osaka 566-8585 (JP); IMOTO, Katsuhiko, Settsu-shi Osaka 566-8585 (JP)
(74) Representative: Goddar, Heinz J.
(86) International application number: PCT/JP2010/055848
(87) International publication number: WO 2010/114018

(56) References cited:
- WO-A1-94/06870
- WO-A1-2006/109600
- JP- - H07 506 599
- JP-A- 8 120 213
- JP-A- 2000 080 330
- JP-A- 2003 019 460
- JP-A- 2004 210 975
- JP-A- 2008 069 336
- US-A- 3 846 359

## Description

### TECHNICAL FIELD

The present invention relates to an environmentally friendly room temperature-curable resin coating composition, in particular, a room temperature-curable resin coating composition having an improved adhesion between coating films when used as an overcoat.

### BACKGROUND ART

Room temperature-curable coating compositions are widely used as a coating intended for on-site application to which curing treatment by heating or the like is difficult, for example, for coating of roofs and walls of exterior constructions.

Room temperature-curable coating compositions of this type generally contain a resin having a cure site (coating film forming component), a curing agent which reacts with the cure site to cure the resin and a curing catalyst to catalyze the curing reaction. As a typical curing system, it is known to cure a resin having hydroxyl group as a cure site using an isocyanate compound as a curing agent. In such a curing system using hydroxyl group as a cure site, isocyanate compounds are excellent curing agents and are used in most of the room temperature-curable coating compositions.

As an example of such compositions, Patent Document 1 describes a coating composition, in which an acrylic silicone resin having a hydrolysable silicon-containing group is subjected to dehydration condensation in the presence of a hydrolysis catalyst.

While hydroxyl-containing fluororesins are also used as a resin of a coating film forming component in terms of weather resistance and stain-proofing property, isocyanate compounds are mainly used as curing agents.

Further, addition of a stain-proofing agent such as hydrolysable silicate to improve anti-adhesive property of a fluororesin based water-repellent coating film has been used (Patent Document 2).

Patent Document 2 also describes an embodiment in which a fluororesin having a hydrolysable silicate group is cured in the presence of a curing catalyst using hydroxyl-containing polydialkylsiloxane as a stain-proofing agent, without using a curing agent.

### PRIOR ART DOCUMENTS

### PATENT DOCUMENTS

Patent Document 1: WO 2006/077751
Patent Document 2: WO 2004/067658

US 3,846,359 A discloses paint compositions comprising alkyd resin binders, combined with relatively huge amounts of alkyl polysilicates and titanium dioxide/butyl titanate as catalyst.

JP 2000080330 A discloses hydroxy group containing acrylic resins or fluoro resins, and two kinds of hydrolysable specific silicate compounds.

JP 2003019460 A discloses a stain resistant coating material comprising a hydroxyl group containing fluoro resin, a polyisocyanate compound and a fluorine atom-containing silicate compound, and a tin catalyst.

JP 2008069336 A discloses a thermosetting top coat comprising hydroxy containing resin, amino resin crosslinking agent and an organic silicate.

### DISCLOSURE OF INVENTION

### PROBLEM TO BE SOLVED BY THE INVENTION

A coating film cured with a hydroxyl-containing resin comprising hydrolysable silicate as a stain-proofing agent and an isocyanate compound has an excellent stain-proofing property and weather resistance, but in some cases, is insufficient with respect to its overcoatability (recoatability). For example, exterior walls of constructions are normally coated over a few days. However, when applying an overcoat to the coating film applied on the previous day, the overcoated film is sometimes pulled off at the interface between the coating films. This phenomenon is desired to be improved.

An object of the present invention is to provide a room temperature-curable resin coating composition which is environmentally friendly and particularly has an improved adhesion between coating films when used as an overcoat.

### MEANS TO SOLVE THE PROBLEM

Namely, the present invention relates to a coating composition comprising (A) a hydroxyl-containing resin having a cure site, (B) a curing agent which reacts with the cure site to cure the resin, and (C) a curing catalyst to catalyze the curing reaction, said curing agent (B) is composed of a hydrolysable group containing fluoroorganosilicate (B1) alone.

In one embodiment, the hydroxyl-containing resin (A) comprises at least one selected from the group consisting of a hydroxyl-containing acrylic resin, a hydroxyl-containing fluoro resin and a hydroxyl-containing polyester resin.

In one embodiment, an isocyanate compound is not substantially contained in the coating composition.

According to the present invention, a mass ratio of hydroxyl-containing resin (A)/hydrolysable group-containing fluoroorganosilicate (B1) is preferably 30/1 to 3/2.

### EFFECT OF THE INVENTION

The present invention can provide a room temperature-curable resin coating composition which is environmentally friendly and particularly has an improved adhesion between coating films when used as an overcoat.

The resin coating film, particularly the fluororesin coating film formed using the coating composition of the present invention has significantly high level of hardness of 3H to 5H, compared to the surface hardness of conventional coating films being F to H. Therefore, the coating film has an excellent scratch resistance, weather resistance, low-staining property and overcoatability.

### EMBODIMENT FOR CARRYING OUT THE INVENTION

The room temperature-curable resin coating composition of the present invention comprises (A) a hydroxyl-containing resin, (B) a curing agent and (C) a curing catalyst.

Each component will be described below.

### (A) Hydroxyl-containing resin

Examples of the hydroxyl-containing resin (A) include fluorine-containing curable resins such as hydroxyl-containing fluororesins; and non-fluorine-containing curable resins such as hydroxyl-containing acrylic resins (also including modified acrylic resins), hydroxyl-containing polyester resins, hydroxyl-containing alkyd resins and hydroxyl-containing silicone resins.

Known resins can be used as a hydroxyl-containing fluororesin and examples thereof include hydroxyl-containing fluororesins described, for example, in WO 94/06870, JP-A-8-12921, JP-A-10-72569, JP-A-4-275379, WO 97/11130, WO 96/26254, etc.

More specific and non-limiting examples include, for example, fluoroolefin based fluororesins which can be obtained by copolymerizing a fluoroolefin, a hydroxyl-containing radically polymerizable unsaturated monomer, and if necessary, other radically polymerizable unsaturated monomers being copolymerizable therewith; fluorine-containing acrylic resins obtained by copolymerizing a monomer having a perfluoroalkyl group or a perfluoroalkenyl group at one end thereof and an ethylenic double bond at the other end, a hydroxyl-containing acrylate, and if necessary, other radically polymerizable unsaturated monomers being copolymerizable therewith; and the like.

Examples of fluoroolefins include, for example, one or two or more of tetrafluoroethylene (TFE), chlorotrifluoroethylene (CTFE), trifluoroethylene (TrFE), vinylidene fluoride (VdF), vinyl fluoride (VF) and hexafluoropropylene (HFP), and the like and particularly, TFE, CTFE, VdF, and the like are prefered in view of excellent solvent solubility of fluoroolefin based fluororesins prepared therefrom and excellent weather resistance, heat resistance and chemical resistance of the obtained coating films.

Examples of hydroxyl-containing radically polymerizable unsaturated monomers include those having a hydroxyl group and a radically polymerizable unsaturated double bond that allows for the copolymerization with fluoroolefin. Prefered specific examples include, for example, hydroxyalkyl vinyl ethers such as hydroxyethyl vinyl ether, hydroxypropyl vinyl ether, hydroxybutyl vinyl ether and hydroxypentyl vinyl ether; hydroxy allyl ethers such as ethylene glycol monoallyl ether, diethylene glycol monoallyl ether, triethylene glycol monoallyl ether and glycerin monoallyl ether; and furthermore, the adducts of those hydroxyl-containing radically polymerizable unsaturated monomers and lactones such as ε-caprolactone and γ-valerolactone.

As for the other copolymerizable radically polymerizable unsaturated monomers, the monomers can be selected and used from well-known monomers based on the required properties of coating films. Particularly, examples thereof include α-olefins such as ethylene, propylene, isobutylene, butylene-1 and chloroprene; vinyl ethers such as ethyl vinyl ether, isobutyl vinyl ether, butyl vinyl ether, cyclohexyl vinyl ether, propyl vinyl ether, isopropyl vinyl ether, tert-butyl vinyl ether, pentyl vinyl ether and hexyl vinyl ether; allyl vinyl ethers such as phenyl vinyl ether, o-, m-, p-trivinyl ether; carboxylic acid vinyl esters such as vinyl acetate, vinyl lactate, vinyl butyrate, vinyl isobutyrate, vinyl caproate, vinyl isocaproate, vinyl pivalate, vinyl versatate (e.g. CH₂=CHOC=OC₈H₁₇, CH₂=CHOC=OC₉H₁₉) and vinyl benzoate; isopropenyl esters of aliphatic acids such as isopropenyl acetate and isopropenyl propionate.

The hydroxyl-containing fluororesin may further include a carboxyl group. The carboxyl group can be introduced, for example, by addition reaction of partial amount of hydroxyl groups of the hydroxyl-containing fluororesin with polybasic anhydrides (e.g. itaconic anhydride, succinic anhydride, and the like).

Examples of the monomers for hydroxyl-containing fluorine-containing acrylic resin, which have perfluoroalkyl group or perfluoroalkenyl group at one end and ethylenic double bond at the other end, include preferably, for example, perfluorobutyl ethyl methacrylate, perfluorooctyl ethyl methacrylate, perfluoroisononyl ethyl methacrylate and perfluorodecyl ethyl methacrylate.

Prefered examples of hydroxyl-containing acrylate include 2-hydroxyethyl acrylate, hydroxypropyl acrylate, 2-hydroxyethyl methacrylate, hydroxypropyl methacrylate, and the like.

Prefered examples of other radically polymerizable unsaturated monomers for the hydroxyl-containing fluorine-containing acrylic resin, which is capable of undergoing the copolymerization with the above-mentioned monomers include esters of alkyl (meth)acrylates such as methyl acrylate, ethyl acrylate, propyl acrylate, isopropyl acrylate, butyl acrylate, hexyl acrylate, octyl acrylate, lauryl acrylate, cyclohexyl acrylate, methyl methacrylate, ethyl methacrylate, propyl methacrylate, isopropyl methacrylate, butyl methacrylate, hexyl methacrylate, octyl methacrylate and lauryl methacrylate; ethylenically unsaturated carboxylic acids such as acrylic acid and methacrylic acid; aromatic vinyl monomers such as styrene, α-methyl styrene and vinyltoluene; amide compounds of (meth)acrylate and derivatives thereof; acrylonitriles such as acrylonitrile and methacrylonitrile; and the like.

Examples of other hydroxyl-containing fluororesin include fluoroolefin copolymers described in JP-A-8-231919, JP-A-10-265731, JP-A-10-204374, JP-A-8-12922, and the like.

Examples of commercially available hydroxyl-containing fluororesins include LUMIFLON (trade name, available from ASAHI GLASS CO., LTD.), CEFRAL COAT (trade name, available from CENTRAL GLASS CO., LTD.), ZAFLON (trade name, available from TOAGOSEI CO., LTD.), ZEFFLE (trade name, available from DAIKIN INDUSTRIES, LTD.), FLUONATE (trade name, available from DIC CORPORATION.), and the like.

Examples of hydroxyl-containing acrylic resins include HITAROID 3004, HITAROID 3018, HITAROID 3046C, HITAROID 6500B and HITAROID 6500 (trade names, all are available from HITACHI CHEMICAL CO., LTD.); ACRYDIC A810-45, ACRYDIC A814 and ACRYDIC 47-540 (trade names, all are available from DIC CORPORATION); DIANAL LR-620, DIANAL SS-1084 and DIANAL SS-792 (trade names, all are available from MITSUBISHI RAYON CO., LTD.); OLESTER Q166 and OLESTER Q185 (trade names, all are available from MITSUI TOATSU CHEMICALS, INC.); HARIACRON 8360G-55, HARIACRON 8360HS-130 and HARIACRON 8160 (trade names, all are available from HARIMA CHEMICALS, INC), and the like.

Examples of hydroxyl-containing polyester resins include ESPEC (trade name) available from HITACHI CHEMICAL CO., LTD., DESMOPHEN (trade name) available from SUMITOMO BAYER URETHANE CO., LTD., BECKOSOL (trade name) available from DIC CORPORATION, and the like.

Among them, at least one selected from the group consisting of hydroxyl-containing fluororesins, hydroxyl-containing acrylic resins and hydroxyl-containing polyester resins is prefered and particularly, hydroxyl-containing fluororesin is more prefered.

The hydroxyl value of the hydroxyl-containing resin (A) is not limited particularly, and for example, is preferably 5 to 200 mgKOH/g, further preferably 10 to 150 mgKOH/g.

### (B) Curing agent

### (B1) Hydrolysable group-containing fluoroorganosilicate

Preferred examples thereof include fluoroorganosilicates described in WO 96/26254, WO 97/11130, and the like. Fluoroorganosilicates are preferred in view of the surface migration and concentration property, and hydrolysis and condensation rate when coating as well as low-staining performance obtained finally.

Examples of fluoroorganosilicate include tetrafunctional fluoroorganosilicates represented by the formula (3):

(Rf¹O)ₘSi(OR³)₄₋ₘ

wherein Rf¹ is the same or different and is a fluorine-containing hydrocarbon group having 1 to 20 carbon atoms, preferably 1 to 10 carbon atoms which may contain oxygen atom, nitrogen atom and/or silicon atom; R³ is the same or different and is a hydrocarbon group having 1 to 10 carbon atoms, m is a integer of from 1 to 4, or oligomers thereof, bi- or tri-functional fluoroorganosilicates represented by the formula (4):

(R⁴)ₚSi(ORf²)_{q}(OR⁴)_{4-(p+q)}

wherein Rf² is the same or different and is a fluorine-containing hydrocarbon group having 1 to 20 carbon atoms, preferably 1 to 10 carbon atoms which may contain oxygen atom, nitrogen atom and/or silicon atom; R⁴ is the same or different and is a hydrocarbon group having 1 to 10 carbon atoms; p is 1 or 2; q is 1 to 3; p+q=4, or oligomers thereof, and further co-condensation products (cooligomers) of a tetrafunctional fluoroorganosilicate with a bi- or tri-functional fluoroorganosilicate, and if necessary, with a bi-, tri- or tetra-functional nonfluoroorganosilicate.

In the formulae (3) and (4), the same groups as R¹ and R² which are described in the formulae (1) and (2) are used as hydrocarbon groups represented by R³ and R⁴.

Specifically examples thereof include alkyl, fluoroalkyl, fluorocarbonyl and fluoroether groups which are described at pages 7 to 8 in WO 97/11130, and may be of linear or branched chain, and among them, for example, -(CH₂)ₘH, -CH(CH₃)₂, -CH₂(CF₂)₂H, -CH₂(CF₂)₃H, -CH₂(CF₂)₄H, -CHFCF₂CF₂H, -CH₂CF₃, -CH₂CF₂CF₃, -CH₂CF₂CHFCF₃, -CH₂(CF₂)₂CF₃, -CH₂CH₂(CF₂)₃CF₃, -CH₂CH₂(CF₂)₇CF₃, -C=OCF₃, -C=OCF₂CF₃, -C=O(CF₂)₆CF₃, -C=O(CF₂)₇CF₃, and the like, wherein m is 0 or an integer of from 1 to 6 are particularly preferable in view of good balance of the surface concentration property and hydrolyzability.

Prefered examples of fluoroorganosilicates include, for example, one or two or more fluoroorganosilicates having the above fluorine-containing organic groups described in WO 96/26254 and WO 97/11130; and one or two or more (co-)condensates thereof.

The mass ratio of hydroxyl-containing resin (A) to hydrolysable group-containing fluoroorganosilicate (B1), namely, the ratio (A)/(B) is preferably within the range from 30/1 to 3/2 in view of good hardness and weather resistance of the coating film, and good film adhesion.

### (C) Curing catalyst

Examples of curing catalysts (C) include, for example, organotin compounds, acid phosphates, reactants of acid phosphate and amine, saturated or unsaturated polycarboxylic acid or acid anhydrides thereof, organotitanate compounds, amine compounds, lead octoate, and the like.

Examples of organotin compounds include dibutyltin dilaurate, dibutyltin maleate, dioctyltin maleate, dibutyltin diacetate, dibutyltin phthalate, tin octoate, tin naphthenate, dibutyltin methoxide, and the like.

An acid phosphate is a phosphoric acid ester including a moiety represented by; 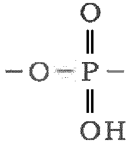 and examples thereof include, for example, organic acid phosphates represented by; 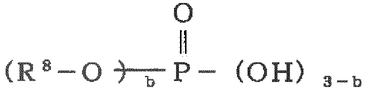 wherein, b is 1 or 2, R⁸ is an organic residue. Particular examples are compounds represented by;

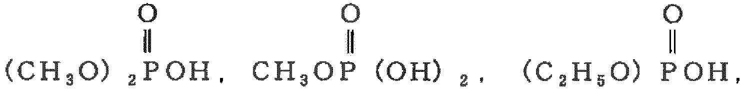

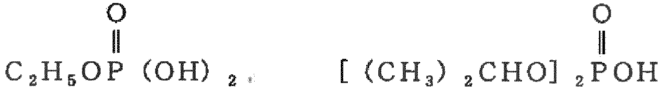

Examples of organotitanate compounds include, for example, alkoxy titanium compounds such as tetraisopropoxy titanium, tetrabutoxy titanium, tetrakis(2-ethylhexyloxy)titanium and tetrastearyloxy titanium; titanium chelate compounds such as diisopropoxybis(ethylacetoacetate) titanium, and diisopropoxybis(acetylacetonato)titanium; and titanates such as titanium stearate, tri-n-butoxy titanium monostearate, diisopropoxy distearate, tetrabutyl titanate, tetra isopropyl titanate and triethanol amine titanate.

Examples of amine compounds include, for example, amine compounds such as butylamine, octylamine, dibutylamine, monoethanolamine, diethanolamine, triethanolamine, diethylenetriamine, triethylenetetramine, oleylamine, cyclohexylamine, guanidine, diphenylguanidine, 2,4,6-tris(dimethylaminomethyl)phenol, morpholine, N-methylmorpholine, 1,8-diazabicyclo(5.4.0)undecene-7 (DBU), and further salts such as carboxylates thereof, low molecular weight polyamide resin obtained from the reaction of excess amount of polyamine with polybasic acid, reaction products of an excess amount of polyamine with an epoxy compound, and the like.

The amount of the curing catalyst (C) to be added is preferably 0.5 to 20 % by mass for the amount of the curing agent.

The coating composition of the present invention can be prepared by adding the components (A) to (C), and if necessary, usual additives in a solvent and then mixing to disperse and dissolve.

Examples of solvents include, but not limited to, for example, aromatic hydrocarbon based solvents such as xylene, toluene and solvent naphtha; aliphatic hydrocarbon based solvents such as n-hexane, n-pentane, n-octane, n-nonane, n-decane, n-undecane, n-dodecane, mineral spirit and coal tar naphtha; ester based solvents such as ethyl acetate and butyl acetate; ketone based solvents such as methyl isobutyl ketone; glycol ether based solvents such as ethyl cellosolve; diethyleneglycol ester based solvents such as carbitol acetate; and the like.

Examples of additives which may be added to the coating composition of the present invention include a curing accelerator, a pigment, a pigment dispersant, a leveling agent, an antifoaming agent, an antigelling agent, an ultraviolet absorber, an antioxidant, a hydrophilizing agent, and the like.

In order to form a coating film, conventional methods such as a brush, a roller, an air spray, an airless spray, a flow coater, a roll coater, a spin coater, and the like may be applied, and the coating can be applied on various substrates.

The coating film can be formed directly on a substrate or via a primer or if necessary, via an undercoating layer. The outermost cured coating film layer usually has a layer thickness of 5 to 100 µm, preferably 8 to 50 µm.

Known primers for fluororesin coating can be used as a primer and examples thereof include epoxy primers, zinc-rich primers and the like. Known primers for fluororesin coating can be used as an undercoating layer and example thereof include acrylic coating, urethane-based coating, polyester-based coating, epoxy-based coating, and the like.

The obtained coating film has extremely high hardness, excellent adhesion (recoatability) when used as an overcoat and further good stain-proofing property (hydrophilizing property).

The coating composition of the present invention is suitable for the coating of, for example, the following substrates.

Namely, the coating composition can be directly applied on a metal, a concrete and plastics (acrylic resin, polyester resin and polycarbonate resin and the like) as a coating for indoor uses such as building materials, interior materials and home electric appliances, or as a coating for exterior uses such as structural materials, automobiles, aircrafts, marine vessels, trains, home electric appliances and solar cells, or can be applied over an undercoat such as wash primer, antirust coating, epoxy coating, acrylic resin coating and polyester resin coating in the same manner as in application of usual curable coating compositions. Further, the coating composition can be used as sealing agents or film forming agents.

### EXAMPLE

The present invention is explained in detail by means of Examples, but is not limited thereto.

### EXAMPLE 1

To 10 g of hydroxyl-containing TFE based copolymer (trade name: ZEFFLE GK-570 white paint available from DAIKIN INDUSTRIES, LTD., copolymer concentration: 32.3 % by mass, A1) as a hydroxyl-containing resin (A), 2.2 g of fluoroorganosilicate based curing agent (trade name: ZEFFLE GH701 available from DAIKIN INDUSTRIES, LTD., B1-1) as a curing agent (B1), 2.3 g of curing catalyst (C) diluted with butyl acetate to 5 % by mass (hydrolysis catalyst. trade name: ORGATIX TC-750 available from MATSUMOTO TRADING CO., LTD., C1) and 0.7 g of butyl acetate/methoxypropylacetate (PGM-AC available from SANKYO CHEMICAL INDUSTRY CO., LTD) (mass ratio of 5/5) as an external thinner in an outer percentage were added and stirred to obtain a coating composition.

The coating film was formed using the obtained coating composition in the following manner. The adhesiveness, pencil hardness, water contact angle and accelerated weathering resistance were evaluated. Results are shown in Table 1.

### (Adhesion of coating film)

A commercially available urethane based coating material in a two-component solution system for construction-related application (ZEFFLE ™ heat shield intermediate coating material available from DAIKIN INDUSTRIES, LTD.) is applied in advance on an aluminum plate subjected to chemical conversion treatment (AM-712 treatment in accordance with JIS H4000 A1050P, thickness: 0.5 mm) by spray coating and then cured at room temperature for one day to prepare a base coated plate with a primer layer having a dried film thickness of about 40 µm. On this coated plate, the coating composition is applied by brush so as to have a dried film thickness of about 30 µm to form a top coating layer, and then dried at room temperature for 2 weeks and forcedly dried at 150°C for 2 hours.

After drying, the same coating composition is applied on the top coating layer by brush so as to have a dried film thickness of about 30 µm, and then dried at room temperature for 2 weeks and dried forcedly at 150°C for 2 hours to form a second top coating layer.

The overcoated part of the obtained coated plate is cross-cut into 16 squares (about 2 mm on a side) by a cutter-knife. Subsequently, a piece of transparent adhesive tape (Sellotape ™ CT-18 available from NICHIBAN CO., LTD.) is pressed firmly over the cross-cut area. Then the tape is quickly pulled away by hand. The adhesion between the first top coating layer and the second top coating layer is visually evaluated. Criteria for the evaluation are as follows.
A: No coating comes off.
B: It shows coating comes off slightly and partially.
C: It shows coating comes off extensively.
D: Whole area of coating comes off readily.

### (Pencil hardness)

Commercially available urethane based coating material in a two-component solution system for construction-related application (ZEFFLE ™ heat shield intermediate coating material available from DAIKIN INDUSTRIES, LTD.) is applied in advance on an aluminum plate subjected to chemical conversion treatment (AM-712 treatment in accordance with JIS H4000 A1050P, thickness: 0.5 mm) by spray coating and then cured at room temperature for one day to prepare a base coated plate with a primer layer having a dried film thickness of about 40 µm. On this coated plate, the coating composition is applied by brush so as to have a dried film thickness of about 30 µm to form a top coating layer. The top coating layer is dried at room temperature for 2 weeks and dried forcedly at 150°C for 2 hours. The pencil hardness of the obtained coated plate is evaluated according to JIS K 5400.

The pencil hardness is also evaluated for a coated plate prepared by drying a coating film at room temperature (about 25°C) for 1 week.

### (Water contact angle)

Initial water contact angles, water contact angles after 1-week outdoor exposure and water contact angles after immersing in water for one day are measured with a contact angle meter (Model CA-DT·A available from KYOWA INTERFACE SCIENCE CO., LTD.).

### (Accelerated weather resistance)

Q-UV (QUV UV fluorescent tube type weather-ometer available from Qlab, U.S.A) is used. The accelerated weather resistance is shown by gloss retention ratio after 500 hours assuming that an initial gloss at 60 degree is 100.

### EXAMPLE 2 (not according to the invention)

To 10 g of the hydroxyl-containing TFE based copolymer (A1) as a hydroxyl-containing resin, 1.3 g of a nonfluoroorganosilicate based curing agent (trade name: MS-57 available from MITSUBISHI CHEMICAL CORPORATION, B1-2) as a curing agent (B1), 1.3 g of the curing catalyst (C1) diluted with butyl acetate to 5 % and 0.7 g of butyl acetate/PGM-AC (mass ratio of 5/5) as an external thinner were added and sufficiently stirred to obtain a coating composition.

The obtained coating composition was used to form a coating film in the same manner as in Example 1. The adhesion, pencil hardness, water contact angle and accelerated weather resistance were evaluated. The results are shown in Table 1.

### EXAMPLE 3 (not according to the invention)

To 10 g of the hydroxyl-containing TFE based copolymer (A1) as a hydroxyl-containing resin, 1.1 g of the curing agent (B1-1), 0.6 g of the curing agent (B1-2), 1.8 g of the curing catalyst (C1) diluted with butyl acetate to 5 % and 0.7 g of butyl acetate/PGM-AC (mass ratio of 5/5) as an external thinner were added and sufficiently stirred to obtain a coating composition.

The obtained coating composition was used to form a coating film in the same manner as in Example 1. The adhesion, pencil hardness, water contact angle and accelerated weather resistance were evaluated. The results are shown in Table 1.

### EXAMPLE 4

To 10 g of the hydroxyl-containing acrylic copolymer (A2) as a hydroxyl-containing resin, 2.1 g of the curing agent (B1-1), 2.2 g of the curing catalyst (C1) diluted with butyl acetate to 5 % and 0.7 g of butyl acetate/PGM-AC (mass ratio of 5/5) as an external thinner were added and sufficiently stirred to obtain a coating composition.

The obtained coating composition was used to form a coating film in the same manner as in Example 1. The adhesion, pencil hardness, water contact angle and accelerated weather resistance were evaluated. The results are shown in Table 1.

### COMPARATIVE EXAMPLE 1

To 10 g of hydroxyl-containing TFE based copolymer (trade name: ZEFFLE GK-570 white paint available from DAIKIN INDUSTRIES, LTD., copolymer concentration: 32.3 % by mass, A1) as a hydroxyl-containing resin (A), 1.9 g of the curing agent (B1-1), 0.25 g of the curing agent (B2-1), 2.3 g of the curing catalyst (C1) diluted with butyl acetate to 5 % and 0.7 g of butyl acetate/PGM-AC (mass ratio of 5/5) as an external thinner were added and sufficiently stirred to obtain a coating composition.

The obtained coating composition was used to form a coating film in the same manner as in Example 1. The adhesion, pencil hardness, water contact angle and accelerated weather resistance were evaluated. The results are shown in Table 1.

Abbreviations shown in Table 1 represent the following compounds.
A1: Hydroxyl-containing TFE based copolymer (hydroxyl value: 60 to 65 mgKOH/g, acid value: 3 to 4 mgKOH/g, trade name: ZEFFLE GK-570 white paint available from DAIKIN INDUSTRIES, LTD.)
A2: Hydroxyl-containing acrylic copolymer (hydroxyl value: 94 to 106 mgKOH/g, acid value: 2 to 8 mgKOH/g, trade name: ACRYDIC A-801-P white paint available from DIC CORPORATION)
B1-1: Fluoroorganosilicate based curing agent (trade name: ZEFFLE GH701 available from DAIKIN INDUSTRIES, LTD.)
B1-2: Nonfluoroorganosilicate based curing agent (trade name: MS-57 available from MITSUBISHI CHEMICAL CORPORATION)
B2-1: Hexamethylene di-based polyisocyanurate (DURANATE TPA-100 available from ASAHI KASEI CHEMICALS CORPORATION) C1: Titanium chelate based hydrolysis catalyst (solid content: 95 % by mass, Ti content: 11.2 % by mass, trade name: ORGATIX TC-750 available from MATSUMOTO TRADING CO., LTD.)

**TABLE 1**

| | Example | | | | Com. Ex. |
|---|---|---|---|---|---|
| | 1 | 2 | 3 | 4 | 1 |
| Coating composition (part by mass) | | | | | |
| (A) Hydroxyl-containing resin white paint | | | | | |
| (A1)(Solid content: 32.3 % by mass) | 10 | 10 | 10 | - | 10 |
| (A2)(Solid content: 31.6 % by mass) | - | - | - | 10 | - |
| (B) Curing agent | | | | | |
| (B1) Hydrolysable silicate | | | | | |
| B1-1 | 2.2 | - | 1.1 | 2.1 | 1.9 |
| B1-2 | - | 1.3 | 0.6 | - | - |
| (B2) Polyisocyanate | | | | | |
| B2-1 | - | - | - | - | 0.25 |
| (C) Curing catalyst | | | | | |
| (C1) | 2.3 | 1.3 | 1.8 | 2.1 | 2.3 |
| (Solid content of A)/(B1)(mass ratio) | 1.5/1 | 2.7/1 | 1.9/1 | 1.5/1 | 1.7/1 |

| Coating film characteristics | | | | | |
|---|---|---|---|---|---|
| Adhesion | A | A | A | A | A |
| Pencil hardness | | | | | |
| Drying at room temp. | H | H | H | 2H | H |
| Drying forcedly | 6H | 4H | 5H | 6H | 5H |
| Water contact angle (°) | | | | | |
| Initially | 66.3 | 92.8 | 78.8 | 55 | 71.3 |
| After exposing | 29.8 | 88.8 | 37.5 | 24 | 31.5 |
| After immersing in water | 38.7 | 81.6 | 49.5 | 29.8 | 38.1 |

| Accelerated weather resistance test | | | | | |
|---|---|---|---|---|---|
| Gloss retention ratio (%) | 100 | 100 | 99 | 90 | 80 |

It is seen from the results shown in Table 1 that the adhesion between the coating films when the coating is used as an overcoat is good.

## Claims

1. A coating composition comprising (A) a hydroxyl-containing resin having a cure site, (B) a curing agent which reacts with the cure site to cure the resin, and (C) a curing catalyst to catalyze the curing reaction, said curing agent (B) is composed of a hydrolysable group containing fluoroorganosilicate (B1) alone.

2. The coating composition according to claim 1, wherein the hydroxyl-containing resin (A) comprises at least one selected from the group consisting of a hydroxyl-containing acrylic resin, a hydroxyl- containing fluororesin and a hydroxyl-containing polyester resin.

3. The coating composition according to any of claims 1 or 2, wherein an isocyanate compound is not substantially contained in the coating composition.

4. The coating composition according to any of claims 1 to 3, wherein a mass ratio of hydroxyl-containing resin (A)/hydrolysable group-containing fluoroorganosilicate (B1) is 30/1 to 3/2.

## Patentansprüche

1. Beschichtungszusammensetzung umfassend (A) ein Hydroxyl-enthaltendes Harz mit einer Härtungsstelle, (B) ein Härtungsmittel, das mit der Härtungsstelle reagiert, um das Harz zu härten, und (C) einen Härtungskatalysator, um die Härtungsreaktion zu katalysieren, wobei das Härtungsmittel (B) einzig aus einem eine hydrolysierbare Gruppe enthaltenden Fluororganosilikat (B1) zusammengesetzt ist.

2. Beschichtungszusammensetzung nach Anspruch 1, wobei das Hydroxylenthaltende Harz (A) wenigstens eines umfasst ausgewählt aus der Gruppe bestehend aus einem Hydroxyl-enthaltenden Acrylharz, einem Hydroxyl-enthaltenden Fluorharz und einem Hydroxyl-enthaltenden Polyesterharz.

3. Beschichtungszusammensetzung nach einem der Ansprüche 1 oder 2, wobei eine Isocyanatverbindung im Wesentlichen nicht in der Beschichtungszusammensetzung enthalten ist.

4. Beschichtungszusammensetzung nach einem der Ansprüche 1 bis 3, wobei ein Massenverhältnis des Hydroxyl-enthaltenden Harzes (A)/hydrolysierbare Gruppe-enthaltenden Fluororganosilikats (B1) 30/1 bis 3/2 ist.

## Revendications

1. Une composition de revêtement comprenant (A) une résine contenant de l'hydroxyle ayant un site de durcissement, (B) un agent de durcissement qui réagit avec le site de durcissement pour durcir la résine et (C) un catalyseur de durcissement pour catalyser la réaction de durcissement, ledit agent de durcissement (B) est composé d'un groupe hydrolysable contenant du fluoro-organosilicate (B1) seul.

2. La composition de revêtement selon la revendication 1, dans laquelle la résine contenant de l'hydroxyle (A) comprend au moins une résine sélectionnée dans le groupe constitué d'une résine acrylique contenant de l'hydroxyle, une fluororésine contenant de l'hydroxyle et une résine polyester contenant de l'hydroxyle.

3. La composition de revêtement selon la revendication 1 ou 2, dans laquelle un composé isocyanate n'est pas sensiblement contenu dans la composition de revêtement.

4. La composition de revêtement selon l'une quelconque des revendications 1 à 3, dans laquelle un rapport en poids d'une résine contenant de l'hydroxyle (A) / d'un fluoro-organosilicate contenant un groupe hydrolysable (B1) est compris entre 30/1 et 3/2.
